(19) Europäisches Patentamt
European Patent Office
Office européen des brevets

(11) **EP 4 101 936 A1**

(12) **EUROPEAN PATENT APPLICATION**
published in accordance with Art. 153(4) EPC

(43) Date of publication:
**14.12.2022 Bulletin 2022/50**

(21) Application number: **21795469.2**

(22) Date of filing: **07.04.2021**

(51) International Patent Classification (IPC):
**C21B 5/00** (2006.01)    **C21B 7/24** (2006.01)

(52) Cooperative Patent Classification (CPC):
**C21B 5/00; C21B 7/24**

(86) International application number:
**PCT/JP2021/014778**

(87) International publication number:
**WO 2021/220751 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2020 JP 2020080085**

(71) Applicant: **JFE Steel Corporation
Tokyo 100-0011 (JP)**

(72) Inventors:
• **ICHIKAWA, Kazuhira
Tokyo 100-0011 (JP)**
• **SATO, Takeshi
Tokyo 100-0011 (JP)**
• **YAMAMOTO, Tetsuya
Tokyo 100-0011 (JP)**
• **ITO, Tomohiko
Tokyo 100-0011 (JP)**

(74) Representative: **Hoffmann Eitle
Patent- und Rechtsanwälte PartmbB
Arabellastraße 30
81925 München (DE)**

(54) **METHOD FOR DETECTING FLUCTUATION IN COAGULATION LAYER AND BLAST FURNACE OPERATION METHOD**

(57)     Provided are a method for detecting a fluctuation of a solidified layer, the method enabling early detection of the fluctuation of the solidified layer, and a method for operating a blast furnace by employing the relevant method.

In the method for detecting a fluctuation of a solidified layer, the fluctuation of the solidified layer in the lower part of a blast furnace is detected by using the amount of heat supplied to pig iron in the lower part of the blast furnace and the amount of heat in the pig iron tapped in a predetermined period.

## FIG. 2

**Description**

Technical Field

The present invention relates to a solidified layer fluctuation detection method for detecting a fluctuation of a solidified layer in the lower part of a blast furnace and a method for operating a blast furnace by employing the fluctuation detection method.

Background Art

To extend the life of a blast furnace and stabilize its operation, it is important to quantitatively detect a solidified layer on the lower part of the blast furnace. For example, Non-Patent Literature 1 discloses that one factor that determines the life of a blast furnace is the wear of the bottom bricks of the blast furnace. The bottom bricks of the blast furnace are worn by contact with pig iron. The presence of a solidified layer on surfaces of the bottom bricks of the furnace suppresses this wear; thus, the solidified layer having an appropriate thickness is preferable to be present on the surfaces of the bottom bricks of the furnace.

On the other hand, excessive growth of the solidified layer decreases the capacity of the lower part of the blast furnace for storing molten pig iron. A decrease in capacity for storing pig iron can easily cause the melt to accumulate to the height of tuyeres of the blast furnace when the tapping of the melt from the blast furnace is blocked by some factor. If the melt comes into contact with the tuyeres, erosion will occur at the tuyeres. When erosion damage occurs at the tuyeres, the blast furnace operation is interrupted to repair the tuyeres. Thus, the blast furnace operation cannot be continued stably.

When a large solidified layer is formed in the lower part of the blast furnace, an operation is conducted to dissolve this solidified layer, and it is necessary to ascertain whether the dissolution of the solidified layer in the furnace proceeds properly during the operation. For this purpose, it is important to detect the fluctuation of the solidified layer present in the blast furnace. Non-Patent Literature 1 discloses a method for estimating the thickness of the solidified layer present in the blast furnace by means of heat transfer calculation from the temperature measured with thermometers arranged around the bottom bricks of the blast furnace. Patent Literature 1 discloses an image analysis method for the amount of pig iron-slag mixture tapped from a blast furnace for the purpose of detecting the amount of pig iron-slag mixture tapped from the blast furnace.

Citation List

Patent Literature

PTL 1: Japanese Unexamined Patent Application Publication No. 2016-6221
PTL 2: Japanese Unexamined Patent Application Publication No. 2-115311

Non-Patent Literature

NPL 1: Yoshikawa Fumiaki and five others, "Estimation of refractory wear and solidified layer distribution in the blast furnace hearth and its application to the operation", Tetsu-to-Hagané, vol. 73(1987), No. 15, P2068-P2075

Summary of Invention

Technical Problem

In the method disclosed in Non-Patent Literature 1, the heat transfer calculation is based on the assumption of steady-state heat transfer in the solidified layer and the bottom bricks of the blast furnace with the thermometers arranged at the bottom bricks of the furnace. For this reason, the thickness of the solidified layer cannot be estimated until a fluctuation in the thickness of the solidified layer is completed and heat transfer reaches a steady state. Thus, the method disclosed in Non-Patent Literature 1 has a problem that the fluctuation of the solidified layer cannot be detected at an early stage. Although the amount of pig iron and slag tapped can be estimated by the method disclosed in Patent Literature 1, it is difficult to detect the fluctuation of the solidified layer because it cannot separate newly generated pig iron in the blast furnace from that generated by the melting of a solidified material. The present invention has been made in light of the foregoing problems of the related art and aims to provide a method for detecting a fluctuation of a solidified layer, the method enabling early detection of the fluctuation of the solidified layer, and a method for operating a blast furnace by employing the relevant method. Solution to Problem

Means for solving the above problems are described below.

[1] A method for detecting the fluctuation of a solidified layer includes detecting the fluctuation of a solidified layer in the lower part of a blast furnace using the amount of heat supplied to pig iron in the lower part of the blast furnace and the amount of heat in the pig iron tapped in a predetermined period.

[2] In the method for detecting the fluctuation of a solidified layer described in [1], the solidified layer is determined to have grown when expression (1) below is satisfied, and the solidified layer is determined to have decreased when expression (2) is satisfied,

$$\alpha \times T_Q > a \times T_{pig} + b \quad \cdots (1)$$

$$\alpha \times T_Q < a \times T_{pig} + b \quad \cdots (2)$$

where in expressions (1) and (2) above, $\alpha$ is a ratio in which heat supplied to the lower part of the blast furnace in a steady state where the solidified layer does not increase or decrease is transferred to the pig iron, $T_Q$ is a furnace heat index (MJ/t-pig) that is an index of the amount of heat supplied to the lower part of the blast furnace, $T_{pig}$ is a temperature (°C) of the pig iron tapped, and a and b are each a constant determined by a component concentration of the pig iron tapped.

[3] In the method for detecting the fluctuation of a solidified layer described in [1] or [2], the predetermined period is a period from the end of previous tapping of pig iron to the end of current tapping of pig iron.

[4] A method for operating a blast furnace includes detecting the fluctuation of a solidified layer in the lower part of a blast furnace by employing the method for detecting the fluctuation of a solidified layer described in any one of [1] to [3], and promoting melting of the solidified layer when the solidified layer has grown, and promoting growth of the solidified layer when the solidified layer has decreased.

Advantageous Effects of Invention

The implementation of the method for detecting the fluctuation of the solidified layer according to the present invention enables early detection of the increase or decrease of the solidified layer. When the solidified layer in the lower part of the blast furnace is determined to have grown by the fluctuation detection method, the melting of the solidified layer is promoted, and when the solidified layer has decreased, the growth of the solidified layer is promoted. This suppresses the fluctuation of the solidified layer in the lower part of the blast furnace and achieves a stable blast furnace operation.

Brief Description of Drawings

[Fig. 1] Fig. 1 illustrates the relationship between the pig-iron temperature and the furnace heat index $T_Q$ during steady-state operation.
[Fig. 2] Fig. 2 illustrates a fluctuation in $W_x/W_{prod}$ versus the elapsed days.
[Fig. 3] Fig. 3 illustrates the fluctuation of furnace bottom temperature versus the elapsed days.

Description of Embodiments

The present invention will be described below through the embodiments of the present invention. Pig iron produced in a blast furnace is mainly heated by heat generated by sensible heat of a hot blast and combustion of a carbonaceous material in the lower part of the blast furnace. Endothermic reactions, such as a solution loss reaction and a reduction reaction of moisture contained in the hot blast at tuyere tips, also occur in the lower part of the blast furnace. Heat loss also occurs due to heat transfer to the stave in the lower part of the furnace as the heat transfer to the furnace wall. These amounts of heat do not contribute to the heating of the pig iron. Thus, there is considered to be a certain relationship between the heat balance and the pig-iron temperature in the lower part of the blast furnace in the steady state where the solidified layer does not vary.

One of the indices of the amount of heat supplied to the lower part of the blast furnace is a furnace heat index

$T_Q$ (MJ/t-pig) disclosed in Patent Literature 2. $T_Q$ is expressed by expression (3).

$$T_Q = Q_1 + Q_2 - (Q_3 + Q_4 + Q_5 + Q_6) \quad \cdots (3)$$

In expression (3) above, $Q_1$ is the heat of combustion (MJ/t-pig) of coke at the tuyere tips. $Q_1$ can be calculated by dividing the amount of heat generated by coke combustion, which is calculated from the amount of oxygen blown into the blast furnace through the tuyeres per unit time, by the amount of pig iron produced in that unit time.

$Q_2$ is the blast sensible heat (MJ/t-pig) input into the blast furnace by the blast from the tuyeres. $Q_2$ can be calculated by finding the amount of heat input into the blast furnace by the blast per unit time from the measured blast flow rate and blast temperature per unit time, and dividing this value by the amount of pig iron produced in the unit time.

$Q_3$ is heat of the solution loss reaction (MJ/t-pig). The amount of carbon consumed by the furnace reaction in the unit time can be calculated from the difference between the amount of carbon burnt by the blast per unit time and the amount of carbon emitted, the amount of carbon emitted being determined from the analytical value of CO and $CO_2$ gas concentrations in the upper part of the blast furnace. The heat of the solution loss reaction can be calculated from the amount of carbon consumed. $Q_3$ can be calculated by dividing this heat of reaction by the amount of pig iron produced in the unit time.

$Q_4$ is the heat of decomposition of moisture (MJ/t-pig), the moisture being mainly contained in the blast. $Q_4$ can be calculated by dividing the heat of decomposition per unit time, obtained from the measured value of moisture in the blast, by the amount of pig iron produced in the unit time. $Q_5$ is the amount of transition of heat flux (MJ/t-pig) through cooling water. $Q_5$ can be calculated by calculating the amount of heat transfer per unit time to the cooling water based on the amount of cooling water and the temperature difference of the cooling water between the inlet and outlet sides of the blast furnace body, and dividing the amount of heat transfer by the amount of pig iron produced in the unit time. $Q_6$ is the heat of decomposition of the reducing material injected from the tuyeres in unit time. $Q_6$ can be calculated by dividing the relevant heat of decomposition by the amount of pig iron produced in the unit of time.

Instead of $T_Q$ calculated by expression (3), the amount of heat described below may be used as an index of the amount of heat supplied to the lower part of the blast furnace: Sensible heat carried by a gas moving from the lower part to the upper part of the blast furnace is subtracted from $T_Q$. Sensible heat brought by coke and ore materials supplied from the upper part to the lower part of the blast furnace is added thereto. The resulting amount of heat is proportionally divided into pig iron and molten slag. The amount of heat supplied to the pig iron calculated by this method may be used. The sensible heat carried by the gas can be calculated by multiplying the temperature difference between the estimated temperature of the gas burnt in front of the tuyeres and the reference temperature representing the upper end of the lower part of the blast furnace by the specific heat of the gas in the blast furnace. The sensible heat of the raw material supplied to the lower part of the blast furnace can be calculated by multiplying the temperature difference between a temperature of 1,450°C to 1,500°C, which is estimated to be a temperature at the lower end of the cohesive zone, and the above reference temperature by the specific heat of the raw material. The value obtained by these processes is distributed to the melt present in the lower part of the blast furnace; thus, a value obtained by multiplying the relevant value by the ratio of the specific heat of the pig iron out of the sum considering the mass ratio of the specific heats of the pig iron and slag can be regarded as the amount of heat supplied to the pig iron. The reference temperature described above is in the range of 800°C to 1,200°C, preferably 900°C to 1,000°C.

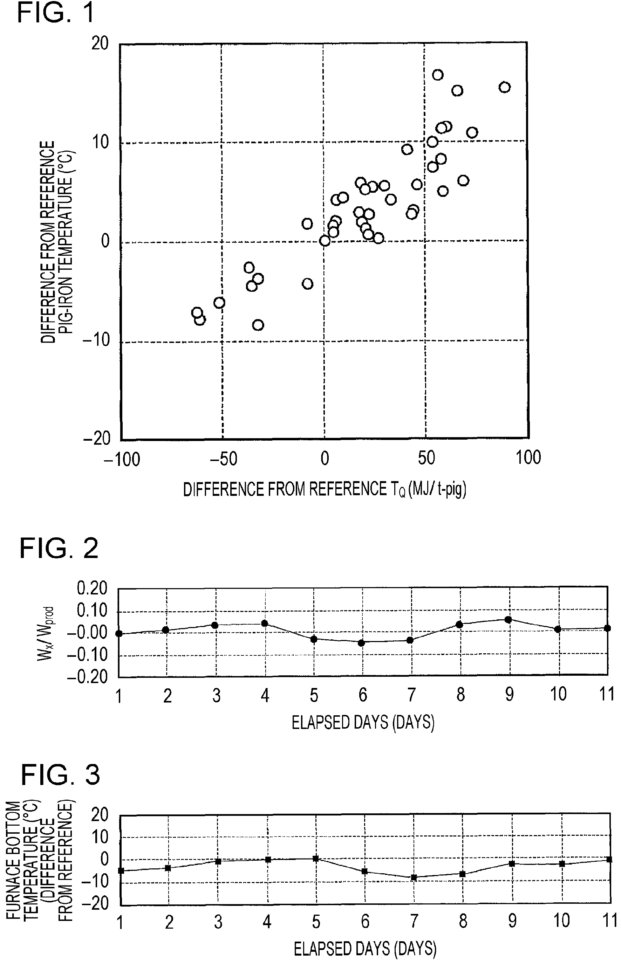

Fig. 1 illustrates the relationship between the pig-iron temperature and the furnace heat index $T_Q$ during the steady state. The horizontal axis in Fig. 1 is the furnace heat index $T_Q$ (difference from reference $T_Q$) (MJ/t-pig), and the vertical axis is the pig-iron temperature (difference from the reference pig-iron temperature) (°C). The steady state is a state of blast furnace operation when the difference in mass between the calculated amount of pig iron and slag calculated from the amount of raw materials charged into the blast furnace per day and the actual amount of pig iron and slag tapped from the blast furnace on that day is within 5 mass%. Hereinafter, a blast furnace operation in a steady state may be referred to as a steady-state operation. The pig-iron temperature in the following description is an average value of the pig-iron temperatures on that day. In Fig. 1, however, an intermediate value of the pig-iron temperature is defined as a reference pig-iron temperature (1,500°C, in the example illustrated in Fig. 1), and the pig-iron temperature is indicated as a difference from the reference pig-iron temperature.

As illustrated in Fig. 1, in the steady state, there is a correlation between the furnace heat index $T_Q$ and the pig-iron temperature. Accordingly, when $\alpha$ is defined as a ratio at which heat supplied to the lower part of the blast furnace in the steady state is transferred to the pig iron, the relationship of expression (4) below is established.

$$\alpha \times T_Q \times W_{prod} = Q_{pig} \times W_{drain} \quad \cdots (4)$$

In expression (4), $W_{prod}$ (t-pig) is the amount (t) of pig iron produced in the blast furnace in the time t from the end of the previous tapping to the end of the current tapping, and $W_{drain}$ is the amount (t) of pig iron currently tapped from the blast furnace. $Q_{pig}$ (MJ/t-pig) is the amount of heat of the pig iron at the pig-iron temperature $T_{pig}$ (°C) and can be calculated by expression (5) below.

$$Q_{pig} = a \times T_{pig} + b \quad \cdots (5)$$

In expression (5) above, a and b are each a constant determined by the component concentration of tapped pig iron. The values of the constants "a" and "b" corresponding to pig irons having various component concentrations are obtained in advance. For example, in the case of pig iron having a carbon concentration of 4 to 5 mass%, a = 0.84, and b = 84.

Letting the amount of pig iron melted or solidified in the blast furnace in the time t be $W_x$ (t-pig), $W_{drain}$ can be calculated by expression (6) below.

$$W_{drain} = W_{prod} + W_x \quad \cdots (6)$$

In expression (6) above, $W_x$ is the amount of solidified material (t-pig). When the solidified material is dissolved, $W_x$ is a positive value. When the solidified material is solidified, $W_x$ is a negative value. When expressions (5) and (6) are substituted into expression (4), expression (4) is represented by expression (7) below.

$$\alpha \times T_Q \times W_{prod} = (a \times T_{pig} + b) \times (W_{prod} + W_x) \quad \cdots (7)$$

Modification of expression (7) above leads to expression (8) below.

$$W_x/W_{prod} = [\alpha \times T_Q/(a \times T_{pig} + b)] - 1 \quad \cdots (8)$$

During the steady-state operation, heat supplied to the lower part of the furnace is transferred to pig iron at a constant ratio $\alpha$, the relationship of expression (9) is established.

$$\alpha \times T_Q = Q_{pig} = a \times T_{pig} + b \quad \cdots (9)$$

When the relationship of expression (9) is substituted into expression (8) above, the expression can be expanded as presented in expression (10). That is, $W_x = 0$ during the steady-state operation.

$$W_x/W_{prod} = [\alpha \times T_Q/(a \times T_{pig} + b)] - 1 = 1 - 1 = 0 \quad \cdots (10)$$

Under this assumption, there is no increase or decrease in the solidified layer during the steady-state operation. Thus, the pig-iron temperature and the $T_Q$ value when the actual amount of pig iron produced roughly matches the amount of pig iron expected from the amount of raw materials charged are substituted into expression (9), so that it is possible to obtain the $\alpha$ value, which is the ratio at which heat supplied to the lower part of the blast furnace is transferred to the pig iron in the steady state.

When the solidified layer has decreased by melting, the right side of expression (8) is positive, and expression (8) is represented by expression (1) below.

$$\alpha \times T_Q > a \times T_{pig} + b \quad \cdots (1)$$

Expression (1) indicates that when the solidified layer is melted and decreased, pig iron having a low temperature is tapped, compared with the case of the steady-state operation, with respect to the amount of heat supplied to the lower part of the blast furnace. In the method for detecting the fluctuation of a solidified layer according to the present embodiment, this relationship is used to determine that when the amount of heat ($\alpha \times T_Q$) supplied to pig iron in the lower part of the blast furnace is larger than the amount of heat ($a \times T_{pig} + b$) of the pig iron tapped, the amount of heat corresponding to the difference therebetween is used for melting the solidified layer, and the solidified layer in the lower part of the blast furnace is decreased.

On the other hand, when the solidified layer has grown, expression (8) is negative. Thus, expression (8) is represented by expression (2) below.

$$\alpha \times T_Q < a \times T_{pig} + b \quad \cdots (2)$$

Expression (2) indicates that when the solidified layer grows, pig iron having a high amount of heat is tapped, compared with the case of the steady-state operation, with respect to the amount of heat supplied to the lower part of the blast furnace. In the method for detecting the fluctuation of a solidified layer according to the present embodiment, this relationship is used to determine that when the amount of heat ($\alpha \times T_Q$) supplied to pig iron in the lower part of the blast furnace has been smaller than the amount of heat ($a \times T_{pig} + b$) of the pig iron tapped, the amount of heat corresponding to the difference therebetween has been used for solidifying the solidified layer, and the solidified layer in the lower part of the blast furnace has grown.

As described above, in the method for detecting the fluctuation of a solidified layer according to the present embodiment, the fluctuation of the solidified layer in the lower part of the blast furnace is detected using the amount of heat ($\alpha \times T_Q$) supplied to pig iron in the lower part of the blast furnace and the amount of heat ($a \times T_{pig} + b$) of the pig iron tapped in a predetermined period. Specifically, the amount of heat ($\alpha \times T_Q$) supplied to pig iron in the lower part of the blast furnace and the amount of heat ($a \times T_{pig} + b$) of the pig iron tapped are calculated. When ($\alpha \times T_Q$) and ($a \times T_{pig} + b$) satisfy expression (1), the solidified layer is determined to have decreased in the predetermined period. When ($\alpha \times T_Q$) and ($a \times T_{pig} + b$) satisfy expression (2), the solidified layer is determined to have grown in the predetermined period. This enables early detection of the fluctuation of the solidified layer during the blast furnace operation and allows the blast furnace operation to maintain the solidified layer in the lower part of the blast furnace in an appropriate state.

The predetermined period for calculating ($\alpha \times T_Q$) and ($a \times T_{pig} + b$) is preferably a period from the end of the previous tapping of pig iron to the end of the current tapping of pig iron. Each time pig iron is tapped, the temperature and composition values of the pig iron are measured. Thus, $T_{pig}$ (°C) can be determined using these values. The constants a and b can be determined using the component values. The predetermined period is not limited to the period from the end of the previous tapping of pig iron to the end of the current tapping of pig iron as long as "$\alpha \times T_Q$" and "$a \times T_{pig} + b$" in the period can be determined. For example, the $T_{pig}$ values of pig irons tapped in a given period from the end of any given tapping of pig iron to the end of any given tapping of pig iron are weighted-averaged on the basis of the amounts of pig irons tapped. The $T_Q$ values in the period are weighted-averaged in the same manner. The resulting values may be used as values in the given period.

When the solidified layer is determined to have grown by the method for detecting the fluctuation of a solidified layer, a blast furnace operation method is implemented to promote the melting of the solidified layer by increasing the target amount of heat input and increasing the amount of heat supplied to the lower part of the blast furnace. The operation to increase the amount of heat supplied to the lower part of the blast furnace may be performed by increasing the heat of combustion of coke per ton of pig iron as given in $Q_1$ above or by increasing the blast sensible heat per ton of pig iron as given in $Q_2$ above.

When the solidified layer is determined to have decreased by the method for detecting the fluctuation of a solidified layer, a blast furnace operation method is implemented to promote the growth of the solidified layer by decreasing the target amount of heat input and decreasing the amount of heat supplied to the lower part of the blast furnace or increasing the amount of heat transfer from the lower part of the blast furnace. The operation to decrease the amount of heat supplied to the lower part of the blast furnace may be performed by increasing the heat loss given in $Q_5$. This suppresses the fluctuation of the solidified layer in the lower part of the blast furnace and achieves a stable blast furnace operation.

EXAMPLES

An example in which a fluctuation in $W_x/W_{prod}$ and a fluctuation in furnace bottom temperature were examined in a blast furnace operation using a blast furnace having an inner capacity of 5,000 m³ will be described below. Fig. 2 illustrates a fluctuation in $W_x/W_{prod}$ with respect to the elapsed days. In Fig. 2, the horizontal axis is the elapsed days (days), and the vertical axis is $W_x/W_{prod}$.

As illustrated in Fig. 2, $W_x/W_{prod}$ decreased on day 5. The decrease in $W_x/W_{prod}$ indicates that $W_x/W_{prod}$ has been negative and thus expression (2) above is satisfied. Accordingly, it is possible to detect the fact that the solidified layer in the lower part of the blast furnace has grown on day 5.

$W_x/W_{prod}$ increased on day 8. The increase in $W_x/W_{prod}$ indicates that $W_x/W_{prod}$ has been positive and thus expression (1) above is satisfied. Accordingly, it is possible to detect the fact that the solidified layer in the lower part of the blast furnace has decreased on day 8.

Fig. 3 illustrates the fluctuation of the furnace bottom temperature versus the elapsed days in the same blast furnace operation. In Fig. 3, the horizontal axis is the elapsed days (days), and the vertical axis is the furnace bottom temperature (°C). The furnace bottom temperature is the value of a thermometer installed in the middle portion of the hearth of the blast furnace bottom.

As illustrated in Fig. 3, the furnace bottom temperature decreased on day 6. This decrease in furnace bottom temperature is thought to be due to the growth of the solidified layer at the furnace bottom, thereby decreasing the amount of heat transferred from the inside of the furnace to the furnace bottom. That is, it is understood that the detection of the fluctuation of the solidified layer using the furnace bottom temperature is later than the detection using the amount of heat supplied to the lower part of the blast furnace and the temperature of pig iron tapped. From these results, it was confirmed that the implementation of the method for detecting the fluctuation of a solidified layer can detect the increase or decrease of the solidified layer in the lower part of the blast furnace at an early stage. When the solidified layer in the lower part of the blast furnace is determined to have grown on the basis of the detection, an operation for promoting the melting of the solidified layer is performed, and when the solidified layer in the lower part of the blast furnace is determined to have decreased, a blast furnace operation for promoting the growth of the solidified layer is performed. It can be seen that this suppresses the fluctuation of the solidified layer in the lower part of the blast furnace and achieves a stable blast furnace operation.

**Claims**

1. A method for detecting a fluctuation of a solidified layer, comprising detecting a fluctuation of a solidified layer in a lower part of a blast furnace using an amount of heat supplied to pig iron in the lower part of the blast furnace and an amount of heat in the pig iron tapped in a predetermined period.

2. The method for detecting a fluctuation of a solidified layer according to Claim 1, wherein the solidified layer is determined to have grown when expression (1) below is satisfied, and the solidified layer is determined to have decreased when expression (2) is satisfied,

$$\alpha \times T_Q > a \times T_{pig} + b \quad \cdots (1)$$

$$\alpha \times T_Q < a \times T_{pig} + b \quad \cdots (2)$$

where in expressions (1) and (2) above, $\alpha$ is a ratio in which heat supplied to the lower part of the blast furnace in a steady state where the solidified layer does not increase or decrease is transferred to the pig iron,

$T_Q$ is a furnace heat index (MJ/t-pig) that is an index of an amount of heat supplied to the lower part of the blast furnace,
$T_{pig}$ is a temperature (°C) of the pig iron tapped, and
$a$ and $b$ are each a constant determined by a component concentration of the pig iron tapped.

3. The method for detecting a fluctuation of a solidified layer according to Claim 1 or 2, wherein the predetermined period is a period from an end of previous tapping of pig iron to an end of current tapping of pig iron.

4. A method for operating a blast furnace, comprising detecting a fluctuation of a solidified layer in a lower part of a blast furnace by employing the method for detecting a fluctuation of a solidified layer according to any one of Claims 1 to 3, and
promoting melting of the solidified layer when the solidified layer has grown, and promoting growth of the solidified layer when the solidified layer has decreased.

FIG. 1

FIG. 2

FIG. 3

## INTERNATIONAL SEARCH REPORT

| International application No. |
|---|
| PCT/JP2021/014778 |

**A. CLASSIFICATION OF SUBJECT MATTER**
C21B 5/00(2006.01)i; C21B 7/24(2006.01)i
FI: C21B7/24 306; C21B5/00 323

According to International Patent Classification (IPC) or to both national classification and IPC

**B. FIELDS SEARCHED**

Minimum documentation searched (classification system followed by classification symbols)
C21B5/00; C21B7/24

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
JSTPlus/JMEDPlus/JST7580 (JDreamIII), CiNii

**C. DOCUMENTS CONSIDERED TO BE RELEVANT**

| Category* | Citation of document, with indication, where appropriate, of the relevant passages | Relevant to claim No. |
|---|---|---|
| A | JP 57-032308 A (KAWASAKI STEEL CORP.) 22 February 1982 (1982-02-22) entire text all drawings | 1-4 |
| A | JP 2007-077440 A (KOBE STEEL, LTD.) 29 March 2007 (2007-03-29) entire text all drawings | 1-4 |
| A | JP 10-273708 A (NIPPON STEEL CORP.) 13 October 1998 (1998-10-13) entire text all drawings | 1-4 |
| A | JP 7-278627 A (NIPPON STEEL CORP.) 24 October 1995 (1995-10-24) entire text all drawings | 1-4 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 April 2021 (23.04.2021) | 11 May 2021 (11.05.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/014778

| Patent Documents referred in the Report | Publication Date | Patent Family | Publication Date |
|---|---|---|---|
| JP 75-032308 A | 22 Feb. 1982 | (Family: none) | |
| JP 2007-077440 A | 29 Mar. 2007 | (Family: none) | |
| JP 10-273708 A | 13 Oct. 1998 | (Family: none) | |
| JP 7-278627 A | 24 Oct. 1995 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016006221 A

- JP 2115311 A

**Non-patent literature cited in the description**

- **YOSHIKAWA FUMIAKI.** Estimation of refractory wear and solidified layer distribution in the blast furnace hearth and its application to the operation. *Tetsu-to-Hagané,* 1987, vol. 73 (15), 2068, , 2075